# FASCICULE DE BREVET EUROPEEN

(11) **EP 1 479 183 B1**
(45) Date de publication et mention de la délivrance du brevet: **20.07.2005**
(21) Numéro de dépôt: 02704874.3
(22) Date de dépôt: 21.02.2002
(51) Int. Cl.: H04J 14/02

(54) **PROCEDE POUR DETERMINER UNE ROUTE SPECTRALE POUR UNE CONNEXION DONNEE DANS UN RESEAU DE TELECOMMUNICATION OPTIQUE**
VERFAHREN ZUR BESTIMMUNG EINER SPEKTRALEN ROUTE FÜR EINE BESTIMMTE VERBINDUNG IN EINEM OPTISCHEN TELEKOMMUNIKATIONSNETZWERK
METHOD OF DETERMINING A SPECTRAL ROUTE FOR A GIVEN CONNECTION IN AN OPTICAL TELECOMMUNICATION NETWORK

(43) Date de publication de la demande: 24.11.2004
(73) Titulaire: ALCATEL, 75008 Paris (FR)
(72) Inventeur: Vigoureux, Martin, 75015 Paris (FR); Douville, Richard, 91220 Bretigny sur Orge (FR); Dotaro, Emmanuel, 91370 Verrières le Buisson (FR); Ciavaglia, Laurent, 77300 FONTAINEBLEAU (FR)
(74) Mandataire: Lamoureux, Bernard
(86) Numéro de dépôt international: PCT/FR2002/000652
(87) Numéro de publication internationale: WO 2003/079596

(56) Documents cités:
- WO-A-99/46951
- STRAND J ET AL: "Importance of wavelength conversion in an optical network" OPTICAL NETWORKS MAGAZINE, MAY-JUNE 2001, SPIE/KLUWER ACADEMIC PUBLISHERS, NETHERLANDS, vol. 2, no. 3, pages 33-44, XP001106483 ISSN: 1388-6916
- ASHWOOD-SMITH PETER ET AL: "Generalized MPLS - Signaling Functional Description" NETWORK WORKING GROUP, INTERNET DRAFT, HTTP://WWW.IETF.ORG/PROCEEDINGS/02MAR/I-D/ DRAFT-IETF-MPLS-GENERALIZED-SIGNALING-07.T XT, novembre 2001 (2001-11), pages 1-27, XP002216341 cité dans la demande

## Description

L'invention concerne un procédé pour déterminer une route spectrale pour une connexion donnée, dans un réseau de télécommunication optique, et un noeud pour la mise en oeuvre de ce procédé. Elle concerne plus particulièrement les réseaux optiques à multiplexage par division en longueurs d'onde (WDM dans la terminologie anglaise) qui utilisent une pluralité de longueurs d'onde pour transmettre simultanément plusieurs flots de données sur une même fibre optique.

Pour établir une connexion dans un tel réseau, il faut déterminer non seulement une route spatiale constituée d'une suite de segments de route reliant le noeud de départ au noeud d'arrivée, mais il faut déterminer en outre une route spectrale, puisque chaque segment peut supporter une pluralité de longueurs d'ondes constituant chacune un segment de route spectrale. Choisir une route spectrale consiste à choisir la longueur d'onde, ou les longueurs d'onde, à utiliser successivement sur différents segments, le long de la route spatiale. Il est parfois nécessaire d'effectuer des opérations sur le signal et/ou les informations transportés, nécessitant l'ajout et l'utilisation d'équipements spécifiques dans le réseau. Cependant ces opérations de traitement sont coûteuses, il est donc souhaitable de les éviter le plus possible. Ces opérations peuvent concerner la régénération et/ou la conversion de longueur d'onde qui peuvent être réalisées par des moyens purement optiques ou par des moyens de conversion optique-électrique et de conversion électrique-optique.

On parle de « continuité de longueur d'onde » quand la même longueur d'onde est utilisée du noeud de départ au noeud d'arrivée, même si des opérations sur le signal et/ou les informations transportés nécessitent des conversions optique - électronique - optique, ou des régénérations 1R, ou 2R, 3R.

On parle de « transparence », en distinguant plusieurs types de transparence, selon que l'on évite les conversions optique - électronique - optique, ou les conversions de longueur d'onde, ou les régénérations 1R, ou 2R, 3R, ou une combinaison de ces opérations. On cherche à éviter que la route du signal passe par des « points de non transparence » ; et si ce n'est pas possible, on cherche à minimiser le nombre de passages par des points de non transparence. Par exemple, si l'on considère une transparence consistant en une absence de conversion optique - électronique - optique, on veut minimiser le nombre de passages du signal optique à travers des interfaces optoélectroniques et électroniques optiques. S'il n'est pas possible d'éviter complètement des conversions, on cherche une route qui nécessite un nombre minimal de conversions.

Il peut y avoir en outre des contraintes de capacité de liaison ou des contraintes de qualité de service, qui influent le choix de la route spatiale et de la route spectrale.

Actuellement, on ne connaît pas de procédé satisfaisant pour déterminer une telle route transparente. Un procédé a été proposé à IETF dans : Generalized MPLS - Signaling Functional Description, chapitres 3.4 et 3.5, Expiration date : November 2001, Network Working Group, Internet Draft, URL = http://search.ietf.org/internet-drafts/draft-ietf-mpls-generalized-signaling-07.bxt

Ce procédé connu consiste à :
- déterminer, par un procédé de routage classique, une route spatiale reliant un noeud de départ à un noeud d'arrivée, cette route étant constituée d'une suite de segments de route, chaque segment reliant directement deux noeuds du réseau ;
- déterminer un premier jeu de longueurs d'onde, dans le noeud de départ, permettant de communiquer avec le noeud suivant constituant cette route, c'est à dire le deuxième noeud sur cette route ;
- déterminer, parmi le jeu de longueurs d'onde proposé par le noeud précédent, un deuxième jeu de longueurs d'onde, dans le deuxième noeud, permettant de communiquer avec le noeud suivant constituant cette route, c'est à dire le troisième noeud sur cette route;
déterminer, parmi le jeu de longueurs d'onde proposé par le noeud précédent, un (n+1)ième jeu de longueurs d'onde, dans le n-ième noeud, permettant de communiquer avec le noeud suivant constituant cette route, c'est à dire le (n+1)ième noeud sur cette route ; jusqu'à atteindre le noeud d'arrivée.

Ce procédé connu a pour objectif d'assurer uniquement la continuité de la longueur d'onde. Les noeuds ne propagent pas les jeux de longueurs d'onde car ils n'en ont pas besoin pour trouver une route spectrale (si celle ci existe de bout en bout) assurant la continuité de la longueur d'onde.

Chaque noeud de cette route peut conserver ou réduire le jeu de longueurs d'onde qu'il hérite du noeud en amont, selon les ressources disponibles pour la liaison vers le prochain noeud en aval. Une route transparente est finalement établie si le jeu résultant contient au moins une longueur d'onde. Ce procédé a pour inconvénient une forte probabilité de blocage, car le choix effectué localement dans chaque noeud peut réduire la possibilités de choix dans les noeuds situés en aval. Ce procédé fournit donc une solution sous-optimale, ou, dans certains cas, ne fournit aucune solution, alors qu'il existe en fait une solution acceptable bien que n'étant pas transparente pas de bout en bout. En outre, ce procédé connu ne prend en compte qu'un paramètre : La continuité d'une longueur d'onde donnée.

Le but de l'invention est de proposer un procédé n'ayant pas ces inconvénients.

D'autres procédés de détermination d'une route spectrale sont connus du document "Importance of wavelength conversion in an optical network" par STRAND J ET AL, OPTICAL NETWORKS MAGAZINE, MAY-JUNE 2001, SPIE/KLUWER ACADEMIC PUBLISHERS, NETHERLANDS, vol. 2, no. 3, pages 33-44, XP001106483.

L'objet de l'invention est un procédé selon la revendication 1.

Le procédé ainsi caractérisé présente l'avantage de réduire la probabilité d'un blocage dû à une impossibilité de trouver une route, parce qu'il permet d'avoir, à un moment donné, une connaissance des valeurs de paramètres (notamment de transparence) pour tous les segments constituant une route candidate ou des routes candidates. Cette connaissance complète permet de choisir plus efficacement une route transparente, ou comportant un minimum de points de non-transparence. Cette vue d'ensemble permet de faire une réelle optimisation, c'est à dire ne pas abandonner, en cours de processus, des solutions possibles.

Selon un mode de mise en oeuvre préférentiel, pour collecter des valeurs de paramètres caractérisant tous les segments de route le long de chaque route spatiale candidate, il consiste à envoyer un message de demande d'établissement de route, du noeud de départ au noeud d'arrivée, et de collecter dans ce message, lors de son passage à travers chaque noeud le long de cette route spatiale candidate, des valeurs de paramètre.

Il est à noter que ce procédé peut être appliqué plusieurs fois simultanément sur des route spatiales distinctes pour satisfaire une même requête d'établissement de connexion pour maximiser les chances de trouver une route transparente.

Selon un mode de réalisation préférentiel, le procédé selon l'invention est mis en oeuvre dans le noeud, dit noeud dit d'arrivée, qui est le noeud situé à l'extrémité de la route dont l'établissement est demandé.

Le procédé selon l'invention utilise les moyens de signalisation du réseau pour transmettre des valeurs de paramètres de transparence, ce qui permet de disposer de valeurs à jour lors de chaque nouvelle requête d'établissement de route.

D'autre part, ces valeurs de paramètres ne concernent pas seulement les longueurs d'onde, elles peuvent concerner tous les autres paramètres physiques des liaisons reliant les noeuds du réseau.

Selon un mode de mise en oeuvre, les paramètres caractérisant tous les segments de route spectrale le long de chaque route spatiale candidate prennent en compte des contraintes de transparence.

Selon un mode de mise en oeuvre, les paramètres caractérisant tous les segments de route spectrale le long de chaque route spatiale candidate prennent en compte des contraintes de capacité de liaison.

Selon un mode de mise en oeuvre, les paramètres caractérisant tous les segments de route spectrale le long de chaque route spatiale candidate prennent en compte des contraintes de qualité de service.

L'invention a aussi pour objet les noeuds de réseau optique selon les revendications 7 et 8.

L'invention sera mieux comprise et d'autres caractéristiques apparaîtront à l'aide de la description ci-dessous et des figures l'accompagnant :
- La figure 1 représente un exemple de réseau optique dans lequel le procédé selon l'invention peut être mis en oeuvre.
- La figure 2 illustre une première partie de la mise en oeuvre du procédé selon l'invention, dans l'exemple de réseau représenté sur la figure 1.
- La figure 3 représente une seconde partie de la mise en oeuvre du procédé selon l'invention, dans l'exemple de réseau représenté sur la figure 1.

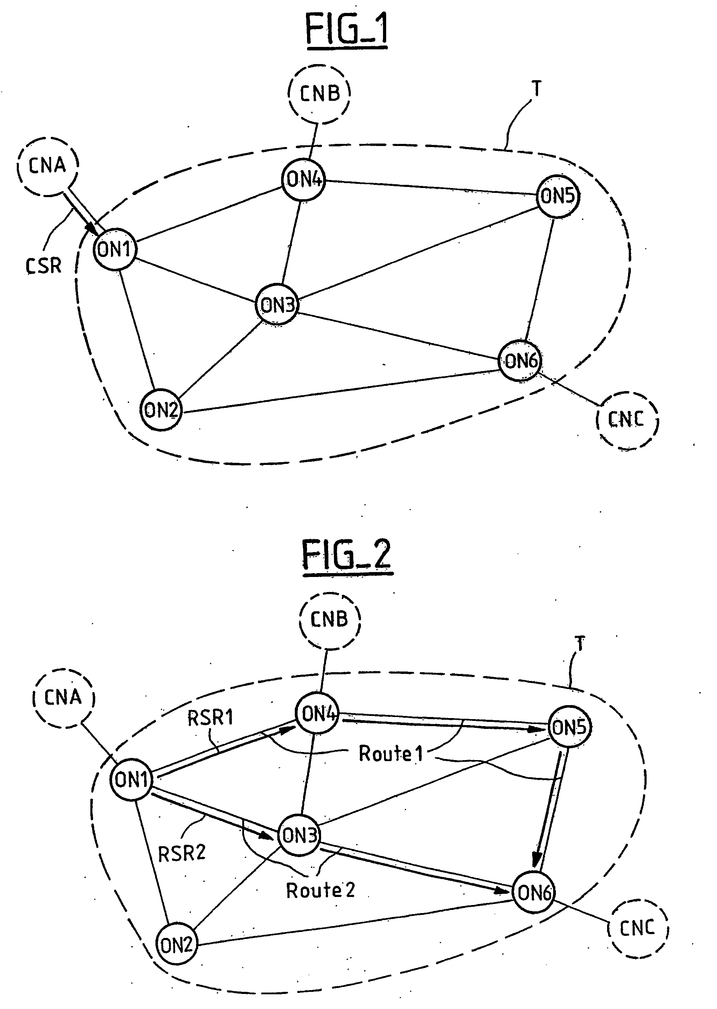

L'exemple de réseau T représenté sur la **figure 1** comporte des noeuds optiques ON1 à ON 6 interconnectés par des liaisons bidirectionnelles ou unidirectionnelles:
ON1-ON 2
ON1-ON 3
ON1-ON 4
ON2-ON 6
ON3-ON 5
ON3-ON 6

Dans cet exemple, le réseau T permet d'interconnecter trois réseaux clients CNA, CNB, CNC qui sont reliés respectivement aux noeuds ON1, ON4, ON6 situés à la périphérie du réseau T. La mise en oeuvre du procédé selon l'invention est faite dans le réseau T et est totalement indépendante du nombre et de la nature-de ces réseaux clients.

Dans un exemple de mise en oeuvre du procédé selon l'invention, une requête d'établissement de connexion CSR est émise par le réseau client CNA vers des moyens de gestion du noeud ON1 afin d'établir une connexion entre les réseaux clients CNA et CNC. Cette requête contient l'identité du réseau client demandeur CNA et du réseau client demandé CNC, et mentionne des contraintes de transparence, de capacité, de qualité de services, etc... Le réseau T doit déterminer une route transparente, et si ce n'est pas possible, une route comportant le moins possible de points de non-tranparence en respectant les contraintes de capacité et de qualité de services, fixées pour cette connexion. Les contraintes sur les paramètres de transparence optique peuvent être des valeurs de longueur d'onde, d'espacement spectral, mais aussi de tolérance sur les effets de la non-linéarité (Mélange quatre ondes, etc), une obligation d'absence de régénération, etc...

La **figure 2** illustre une première partie de cet exemple de mise en oeuvre du procédé selon l'invention. Les moyens de gestion du noeud ON1 traduisent la requête d'établissement de connexion CSR en une requête d'établissement de route, RSR, c'est à dire traduisent des contraintes mentionnées dans la requête de connexion en contraintes portant sur le routage.

Ils déterminent, selon un procédé de routage classique, en fonction de la topologie et de la connectivité du réseau T, une ou des routes spatiales, dites candidates, reliant le réseau client CNA au réseau client CNC. Par exemple, ils trouvent deux routes spatiales candidates, Route 1 et Route 2, qui sont valides parce qu'elles satisfont toutes les contraintes de routage qui sont mentionnées da ns la demande initiale d'établissement de connexion CSR.
Route 1 = ON1, ON4, ON5, ON6
Route 2 = ON1, ON3, ON6

Les moyens de gestion du noeud ON1 émettent alors la requête d'établissement de route RSR , en l'adressant au noeud ON6, cette requête étant émise en deux exemplaires RSR1 et RSR2 acheminée simultanément sur les deux routes Route 1 et Route 2. L'acheminement selon ces deux routes est commandé par les moyens de gestion du noeud de départ ON1 en fournissant la requête aux moyens de signalisation du réseau T. L'exemplaire RSR1 passe d'abord par le noeud ON4 sur la route Route 1, et l'exemplaire RSR2 passe d'abord par le noeud ON3 sur la route Route 2.

Chaque noeud ON1, ON4, ON5 traversé par la requête d'établissement de route RSR1 ajoute, au contenu de la requête, des valeurs de paramètres concernant le segment de route immédiatement en amont et / ou en aval de ce noeud sur cette route spatiale, ainsi que des valeurs de paramètre concernant les interfaces du noeud, ces valeurs correspondant aux paramètres mentionnés dans cette requête, notamment les paramètres de transparence optique. Chaque noeud ON1, ON3 traversé par la requête d'établissement de route RSR2 fait de même dans cette requête RSR2. la liaison entre ON3 et ON6. Ces valeurs de paramètres peuvent concerner aussi bien le lien en aval que celui en amont du noeud. Finalement, les deux exemplaires RSR1 et RSR2 de la requête d'établissement de route arrivent au noeud d'arrivée ON6.

Selon un premier mode de mise en oeuvre, les données collectées dans ces deux exemplaires sont traitées par les moyens de gestion du noeud d'arrivée, ON6, pour déterminer une combinaison optimale de segments de route spectrale entre les noeuds ON1 et ON6 le long de chacune des route spatiales empruntées par les demandes de connexion. Ces données sont traitées selon un algorithme d'optimisation qui minimise une fonction de coût prenant en compte toutes les valeurs de paramètres recueillies. Cet algorithme peut faire intervenir un algorithme de plus court chemin tel que celui de Dijkstra.

Si au moins une route transparente est possible, l'algorithme d'optimisation trouve une route transparente. Si aucune route transparente n'est possible, l'algorithme d'optimisation détermine une route comportant le moins possible de points de non-transparence, c'est à dire une combinaison optimale de sous-chemins transparents.

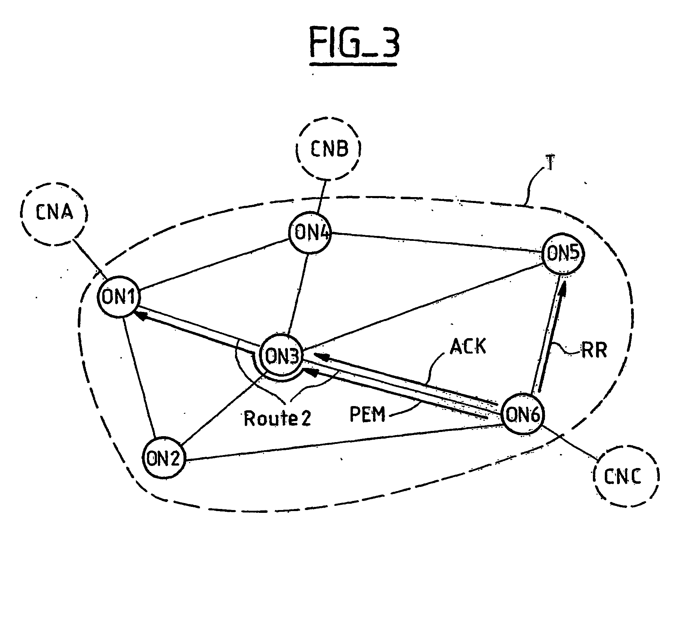

La **figure 3** représente une seconde partie de la mise en oeuvre du procédé selon l'invention. Après avoir ainsi déterminé la route spectrale optimale, le noeud d'arrivée ON6 émet un message d'établissement de route PEM à destination du noeud de départ ON1, et il envoie un message ACK d'accusé de réception de requête d'établissement de route au noeud immédiatement voisin sur la route spatiale qui supporte la route spectrale choisie, Route2, c'est à dire le noeud ON3 dans cet exemple. Ce message contient une liste des noeuds constituant la route déterminée, Route 2 dans cet exemple est constituer de ON1-ON3-ON6.

D'autre part, le noeud d'arrivée ON6 envoie un message RR de relâchement de route à tous les autres noeuds immédiatement voisins le long des routes spatiales non retenues, en l'occurrence Route1. Dans cet exemple, le message de relâchement RR est envoyé au noeud ON5, qui le retransmet en direction du noeud à l'origine de la demande d'établissement de route, ON1.

Si l'algorithme conclut qu'aucune route n'est possible (même non transparente), le noeud d'arrivée ON6 émet un message de relâchement de route adressé à tous les noeuds qui sont sur les routes Route 1 et Route 2, c'est à dire les noeuds ON1, ON3, ON4, ON5.

Selon un second mode de réalisation, les deux exemplaires RSR1 et RSR2 de la requête d'établissement de route (contenant toutes les données collectées) ne sont pas traités dan le noeud d'arrivée ON6, mais sont renvoyés du noeud d'arrivée ON6 au noeud de départ ON1, ou bien à destination d'une unité centrale quelque part dans le réseau T, pour y être traités. Si l'algorithme conclut qu'aucune route n'est possible (même non transparente), le noeud ON1, respectivement l'unité centrale, envoie un message de relâchement de route à tous les noeuds situés le long des routes Route1 et Route 2, c'est à dire les noeuds ON1, ON3, ON4, ON5.

Le premier mode de réalisation a pour avantage d'éviter de retransmettre l'ensemble des données collectées vers le noeud de départ ou une unité centrale de traitement. On évite ainsi d'occuper des ressources du réseau pour cette retransmission.

## Revendications

1. Procédé pour déterminer une route spectrale, dans un réseau de télécommunication optique (T), entre un noeud de départ (ON1) et un noeud d'arrivée (ON6) de ce réseau, comprenant l'etape consistant à:
- déterminer, par un procédé de routage classique, au moins une route spatiale candidate (Route 1, Route 2) reliant le noeud de départ (ON1) au noeud d'arrivée (ON6), chaque route spatiale candidate étant constituée d'une suite de segments de route, chaque segment reliant directement deux noeuds du réseau et pouvant supporter une pluralité de longueurs d'ondes constituant chacune un segment de route spectrale ; et étant **caractérisé par** les étapes consistant à:
- collecter des valeurs de paramètres caractérisant tous les segments de route spectrale le long de chaque route spatiale candidate ;
- et enfin traiter, par un procédé d'optimisation, toutes les valeurs de paramètres ainsi collectées pour choisir une route spectrale et la route spatiale qui la supporte en choisissant la longueur d'onde à utiliser, ou les longueurs d'onde à utiliser successivement, pour relier le noeud de départ (ON1) au noeud d'arrivée (ON6).

2. Procédé selon la revendication 1, **caractérisé en ce que** la collecte des valeurs de paramètres caractérisant tous les segments de route le long de chaque route spatiale candidate consiste à envoyer un message de demande d'établissement de route du noeud de départ (ON1) au noeud d'arrivée (ON6) et à collecter dans ce message, lors de son passage à travers chaque noeud le long de cette route spatiale candidate, des valeurs de paramètres.

3. Procédé selon l'une des revendications précédentes, **caractérisé en ce que** le traitement de toutes les valeurs de paramètres ainsi collectées consiste à exécuter un traitement dans le noeud d'arrivée (ON6).

4. Procédé selon l'une des revendications précédentes, **caractérisé en ce que** les paramètres caractérisant tous les segments de route spectrale le long de chaque route spatiale candidate prennent en compte des contraintes de transparence.

5. Procédé selon l'une des revendications précédentes, **caractérisé en ce que** les paramètres caractérisant tous les segments de route spectrale le long de chaque route spatiale candidate prennent en compte des contraintes de capacité de liaison.

6. Procédé selon l'une des revendications précédentes, **caractérisé en ce que** les paramètres caractérisant tous les segments de route spectrale le long de chaque route spatiale candidate prennent en compte des contraintes de qualité de service.

7. Noeud (ON3,ON4,ON5) de réseau optique (T) pour la mise en oeuvre du procédé selon la revendication 1, **caractérisé en ce qu'**il comporte des moyens de gestion pour :
- recevoir un message de requête d'établissement de route, ce message parcourant une route spatiale (Route 1, Route 2) prédéterminée passant par le noeud (ON3, ON4, ON5);
- ajouter au contenu de ce message des valeurs de paramètres concernant des routes spectrales supportées par le segment de route spatiale immédiatement en amont et / ou en aval de ce noeud sur cette route spatiale, ainsi que des valeurs de paramètres concernant les interfaces du noeud (ON3, ON4, ON5);
- et retransmettre le message ainsi modifié à un autre noeud (ON5, ON6) situé sur le segment de route spatiale immédiatement en aval du noeud (ON3,ON4,ON5), cet autre noeud (ON5, ON6) étant désigné par des informations de routage contenue dans ce message.

8. Noeud (ON6) de réseau optique (T) pour la mise en oeuvre du procédé selon la revendication 1, **caractérisé en ce qu'**il comporte des moyens de gestion pour :
- recevoir au moins un message contenant des valeurs de paramètres collectées le long d'une route spatiale (Route1,Route2) dite candidate reliant un noeud de départ (ON1) au noeud (ON6);
- et traiter, par un procédé d'optimisation, les valeurs de paramètres ainsi collectées le long de la route spatiale candidate pour choisir une route spectrale en choisissant la longueur d'onde à utiliser, ou les longueurs d'onde à utiliser successivement, pour relier le noeud de départ (ON1) au noeud (ON6).

## Patentansprüche

1. Verfahren zur Bestimmung einer spektralen Route in einem optischen Telekommunikationsnetzwerk (T) zwischen einem Ausgangsknoten (ON1) und einem Zielknoten (ON6) dieses Netzes, beinhaltend den Schritt, der darin besteht,
- mit einem klassischen Routingverfahren mindestens eine räumliche Anwärterroute (Route 1, Route 2) zu bestimmen, die den Ausgangsknoten (ON1) mit dem Zielknoten (ON6) verbindet, wobei jede räumliche Anwärterroute aus einer Folge von Routensegmenten besteht, von denen jedes zwei Knoten des Netzes direkt miteinander verbindet, mehrere Wellenlängen unterstützen kann, ein spektrales Routensegment bildet und durch Schritte **gekennzeichnet** ist, die darin bestehen,
- Parameterwerte zu erfassen, die alle spektralen Routensegmente entlang jeder einzelnen räumlichen Anwärterroute kennzeichnen,
- und schließlich nach einem Optimierungsverfahren alle erfaßten Parameterwerte zu verarbeiten, um eine spektrale Route und die räumliche Route, die sie unterstützt,
auszuwählen, indem die zu verwendende Wellenlänge oder die nacheinander zu verwendenden Wellenlängen ausgewählt werden, um den Ausgangsknoten (ON1) mit dem Zielknoten (ON6) zu verbinden.

2. Verfahren gemäß Anspruch 1, **dadurch gekennzeichnet, daß** die Erfassung der Parameterwerte, welche alle Routensegmente entlang jeder der räumlichen Anwärterrouten kennzeichnen, darin besteht, eine Anforderungsmeldung zum Einrichten einer Route vom Ausgangsknoten (ON1) zum Zielknoten (ON6) zu senden und in dieser Meldung bei deren Durchlaufen jedes der Knoten entlang dieser räumlichen Anwärterroute Parameterwerte zu erfassen.

3. Verfahren gemäß einem der vorangegangenen Ansprüche, **dadurch gekennzeichnet, daß** die Verarbeitung aller so erfaßten Parameterwerte darin besteht, im Zielknoten (ON6) eine Verarbeitung auszuführen.

4. Verfahren gemäß einem der vorangegangenen Ansprüche, **dadurch gekennzeichnet, daß** die Parameter, welche alle spektralen Routensegmente entlang jeder der räumlichen Anwärterrouten kennzeichnen, Einschränkungen bezüglich der Transparenz berücksichtigen.

5. Verfahren gemäß einem der vorangegangenen Ansprüche, **dadurch gekennzeichnet, daß** die Parameter, welche alle spektralen Routensegmente entlang jeder der räumlichen Anwärterrouten kennzeichnen, Einschränkungen bezüglich der Verbindungskapazität berücksichtigen.

6. Verfahren gemäß einem der vorangegangenen Ansprüche, **dadurch gekennzeichnet, daß** die Parameter, welche alle spektralen Routensegmente entlang jeder der räumlichen Anwärterrouten kennzeichnen, Einschränkungen bezüglich der Dienstqualität berücksichtigen.

7. Knoten (ON3, ON4, ON5) eines optischen Netzes (T) zur Durchführung des Verfahrens gemäß Anspruch 1, **dadurch gekennzeichnet, daß** dieser Verwaltungsmittel beinhaltet, um
- eine Anforderungsmeldung zum Einrichten einer Route zu empfangen, wobei diese Meldung eine zuvor festgelegte räumliche Route (Route 1, Route 2) durchläuft, welche durch den Knoten (ON3, ON4, ON5) verläuft,
- dem Inhalt dieser Meldung Parameterwerte bezüglich der spektralen Routen hinzuzufügen, die von dem räumlichen Routensegment unterstützt werden, das auf dieser räumlichen Route unmittelbar vor und/oder hinter diesem Knoten liegt, sowie Parameterwerte, welche die Schnittstellen des Knotens (ON3, ON4, ON5) betreffen,
- und die so modifizierte Meldung erneut an einen anderen Knoten (ON5, ON6) zu übermitteln, welcher sich im räumlichen Routensegment unmittelbar hinter dem Knoten (ON3, ON4, ON5) befindet, wobei dieser andere Knoten (ON5, ON6) durch Routinginformationen bezeichnet wird, die in dieser Meldung enthalten sind.

8. Knoten (ON6) eines optischen Netzes (T) zur Durchführung des Verfahrens gemäß Anspruch 1, **dadurch gekennzeichnet, daß** dieser Verwaltungsmittel beinhaltet, um
- mindestens eine Meldung zu empfangen, die Parameterwerte enthält, welche entlang einer räumlichen Route (Route 1, Route 2) erfaßt wurden, die als Anwärterroute bezeichnet wird und einen Ausgangsknoten (ON1) mit dem Zielknoten (ON6) verbindet,
- und nach einem Optimierungsverfahren die so entlang der räumlichen Anwärterroute erfaßten Parameterwerte zu verarbeiten, um eine spektrale Route auszuwählen, indem die zu verwendende Wellenlänge oder die nacheinander zu verwendenden Wellenlängen ausgewählt werden, um den Ausgangsknoten (ON1) mit dem Zielknoten (ON6) zu verbinden.

## Claims

1. A method of determining a spectral route in an optical telecommunications network (T) between a starting node (ON1) and a destination node (ON6) of the network, the method comprising the step consisting in:
- using a conventional routing method to determine at least one candidate spatial route (Route 1, Route 2) connecting the starting node (ON1) to the destination node (ON6), each candidate spatial route consisting of a sequence of route segments, each segment connecting two nodes of the network directly and being adapted to support a plurality of wavelengths each constituting a spectral route segment; and being **characterized by** the steps consisting in:
- collecting values of parameters **characterizing** all the spectral route segments along each candidate spatial route; and
- finally, using an optimization method to process all the collected parameter values to select a spectral route and the spatial route that supports it by selecting the wavelength to be used, or the wavelengths to be used successively, to connect the starting node (ON1) to the destination node (ON6).

2. A method according to claim 1, **characterized in that**, the collecting of parameter values **characterizing** all route segments along each candidate spatial route consists in sending a route set-up request message from the starting node (ON1) to the destination node (ON6) and collecting parameter values **in that** message as it passes through each node along the candidate spatial route.

3. A method according to either preceding claim, **characterized in that** all the collected parameter values are processed in the destination node (ON6).

4. A method according to any preceding claim, **characterized in that** the parameters **characterizing** all the spectral route segments along each candidate spatial route take account of transparency constraints.

5. A method according to any preceding claim, **characterized in that** the parameters **characterizing** all the spectral route segments along each candidate spatial route take account of connection capacity constraints.

6. A method according to any preceding claim, **characterized in that** the parameters **characterizing** all the spectral route segments along each candidate spatial route take account of quality of service constraints.

7. An optical network node (ON3, ON4, ON5) for implementing a method according to claim 1, **characterized in that** it comprises management means for:
- receiving a route set-up request message on a predetermined spatial route (Route 1, Route 2) passing through the node (ON3, ON4, ON5);
- adding to the content of the message parameter values concerning spectral routes supported by the spatial route segment immediately upstream and/or downstream of the node on the spatial route, together with parameter values concerning the interfaces of the node (ON3, ON4, ON5); and
- forwarding the message modified in this way to another node (ON5, ON6) situated on the spatial route segment immediately downstream of the node (ON3, ON4, ON5) and designated by routing information contained in the message.

8. An optical network node (ON6) for implementing a method according to claim 1, the node being **characterized in that** it comprises management means for:
- receiving at least one message containing parameter values collected along a candidate spatial route (Route 1, Route 2) connecting a starting node (ON1) to the node (ON6); and
- using an optimization method to process the parameter values collected in this way along the candidate spatial route to select a spectral route by selecting the wavelength to be used, or the wavelengths to be used successively, to connect the starting node (ON1) to the node (ON6).
